Europäisches Patentamt

European Patent Office

Office européen des brevets

(19)

(11)  EP 0 970 367 B1

(12)  FASCICULE DE BREVET EUROPEEN

(45) Date de publication et mention
de la délivrance du brevet:
**24.09.2003  Bulletin 2003/39**

(21) Numéro de dépôt: **98917231.7**

(22) Date de dépôt: **25.03.1998**

(51) Int Cl.⁷: **G01N 21/89**

(86) Numéro de dépôt international:
**PCT/FR98/00602**

(87) Numéro de publication internationale:
**WO 98/044336 (08.10.1998 Gazette 1998/40)**

(54) **PROCEDE D'INSPECTION DE SURFACE D'UNE BANDE EN DEFILEMENT PAR SEGMENTATION D'IMAGE EN ZONES SUSPECTES**

VERFAHREN ZUR KONTROLLE DER OBERFLÄCHE EINER LAUFENDEN MATERIALBAHN MIT BILDSEGMENTIERUNG ZUR UMGRENZUNG VON DEFEKTBEREICHEN

METHOD FOR EXAMINING DOUBTFUL ZONES ON THE SURFACE OF AN UNWINDING STRIP BY IMAGE SEGMENTATION

(84) Etats contractants désignés:
**AT BE CH DE DK ES FI FR GB IT LI LU NL PT SE**

(30) Priorité: **28.03.1997  FR 9703896**

(43) Date de publication de la demande:
**12.01.2000  Bulletin 2000/02**

(73) Titulaire: **SOLLAC**
**92800 Puteaux (FR)**

(72) Inventeur: **ALEXANDRE, Patrick**
**F-70100 Gray (FR)**

(74) Mandataire: **Moncheny, Michel**
**c/o Cabinet Lavoix**
**2 Place d'Estienne d'Orves**
**75441 Paris Cedex 09 (FR)**

(56) Documents cités:
**EP-A- 0 757 245          WO-A-91/16619**
**WO-A-96/15508          US-A- 4 519 041**
**US-A- 5 091 963          US-A- 5 301 129**

• **D. BRZAKOVIC ET AL: "Designing a defect classification system: a case study" PATTERN RECOGNITION., vol. 29, no. 8, août 1996, US, pages 1401-1419, XP004008127**

**Description**

La présente invention est relative à un procédé d'inspection de surface d'une bande en défilement, en particulier une tôle laminée défilant à grande vitesse, ainsi qu'à une installation d'inspection de surface mettant en oeuvre un tel procédé.

Une première technique classique d'inspection de surface d'une tôle consiste à effectuer un contrôle visuel de la surface de la bande. Une telle technique est très contraignante pour l'opérateur et nécessite en outre de faire passer la bande dans une ligne spécifique d'une chaîne de laminage, dans laquelle elle défile à vitesse réduite. Cette technique a pour inconvénient de réduire considérablement le rendement de la chaîne de laminage.

Une autre technique connue d'inspection de surface consiste à contrôler l'état de surface de la bande de façon automatique au moyen d'une caméra de prise de vues et d'une unité de traitement de signaux pour l'analyse en temps réel des images délivrées par la caméra de prise de vues.

Dans un procédé de ce type, on forme au moins une image numérique d'au moins une des faces de la bande, constituées d'un ensemble de lignes successives d'éléments d'image affectés chacun d'une valeur numérique, on filtre ladite au moins une image numérique pour la détection d'irrégularités de surface, par détection de variations relatives desdites valeurs numériques, et l'on traite ladite au moins une image numérique filtrée pour l'identification du type de défaut de surface de la bande.

Ce type de technique d'inspection de surface permet de contrôler des bandes défilant à des vitesses très supérieures aux vitesses utilisées dans les techniques d'inspection par contrôle visuel.

Toutefois, les images numériques formées se présentent sous la forme d'images successives qui sont susceptibles de couper certains défauts.

Ainsi, les défauts coupés risquent d'être mal identifiés et d'être identifiés comme étant des défauts séparés.

Tel est également le cas lorsque les défauts de surface se présentent sous une forme segmentée.

Un but de l'invention est de pallier cet inconvénient.

Un autre but de 'l'invention est de fournir un procédé d'inspection de surface et une installation d' inspection de surface correspondante permettant d'inspecter des surfaces défilant à grande vitesse.

Elle a donc pour objet un procédé d'inspection de surface d'une bande en défilement, pour la détection de défaut de surface, comprenant les étapes consistant à former, à l'aide de moyens de prise de vues, au moins une image numérique d'au moins une des faces de la bande, constituée d'un ensemble da lignes successives d'éléments d'images, affectés chacun d'une valeur numérique, filtrer ladite au moins une image numérique pour la détection d'irrégularités de surface, par détection de variations relatives desdites valeurs numériques, segmenter ladite au moins une image numérique en zones suspectes de sorte que chaque zone suspecte contienne une irrégularité de surface, et traiter les zones suspectes pour l'identification du type de défaut de surface correspondant à chaque irrégularité détectée, caractérisé en ce que l'étape de segmentation de ladite au moins une image consiste à calculer un premier profil de variation des valeurs numériques des éléments d'image dans une première direction, à seuiller ledit profil calculé de manière à délimiter des bandes d'éléments d'image présentant chacune au moins une irrégularité de surface, à calculer, pour chaque bande délimitée, un deuxième profil de variation des valeurs numériques dans une deuxième direction distincte de la première direction, et à seuiller ledit deuxième profil calculé pour délimiter lesdites zones suspectes contenant chacune une irrégularité de surface. Ladite étape de calcul dudit premier profil comprend le calcul de la somme des valeurs numériques de chaque colonne d'éléments d'image, ladite étape de calcul dudit deuxième profil comprend le calcul, pour chaque- bande, de la somme des valeurs numériques de chaque ligne d'éléments d'image.

Ainsi, la segmentation des images ne se faisant plus de façon arbitraire, mais en fonction de l'apparition d'irrégularités de surface, les défauts ne sont plus susceptibles d'être coupés par le traitement d'images.

Le procédé selon l'invention peut en outre comporter une ou plusieurs caractéristiques suivantes:

- postérieurement a l'étape de segmentation des images en zones suspectes, on calcule, pour chaque zone, la surface individuelle de portions de la zone, constituées chacune d'éléments d'image représentant un segment d'irrégularité, et on élimine les segments d'irrégularité dont la surface est inférieure à un seuil prédéfini ;

- ladite étape de formation d'images- comprend la formation d'un ensemble d'images de parties: successives de la bande en défilement, sous forme de lignes et de. colonnes d'éléments d'images, et la fusion desdites images en une image, en mémorisant lesdites lignes dans une mémoire à des adresses successives;

- postérieurement à l'étape de filtrage de l'image mémorisée, on délimite dans ladite mémoire une zone de stockage, en réponse à une détection d'un élément d'image d'une irrégularité, dans laquelle sont stockées des lignes d'éléments d'imagé successivement délivrées par les moyens de prisé de vues et comportant au moins un élément d'image correspondant à au moins une irrégularité, ladite étape de segmentation étant effectuée sur chaque zone de stockage;

- la zone de stockage, ouverte dans la mémoire en réponse à une détection d'un élément d'image d'une irrégularité, est fermée dès qu'aucun élément d'image d'au moins une irrégularité n'est plus détecté dans un nombre prédéterminé de lignes d'éléments d'image ;

- le procédé comporte en outre une étape de détection de zones de stockage de grande longueur, par comparaison du nombre de lignes d'élément d'image, stockées dans chaque zone de stockage, avec un seuil prédéterminé de détection de zones de stockage de grande longueur, ladite zone de stockage étant fermée en cas de dépassement dudit seuil ;
- postérieurement à l'étape de segmentation d'image en zones suspectes, on forme un groupe de zones suspectes en appariant des zones suspectes de zones de stockage successives, dont au moins l'une est une zone de stockage de grande longueur, et correspondant à une même irrégularité, et lorsque le nombre total des lignes d'éléments d'image des zones suspectes dudit groupe est supérieur à un seuil de détection de défaut de grande longueur, on effectue l'étape de traitement d'image sur l'une desdites zones suspectes dudit groupe et l'on affecte le résultat du traitement aux autres zones suspectes dudit groupe.

L'invention a également pour objet une installation d'inspection de surface pour la mise en oeuvre d'un procédé tel que défini ci-dessus, caractérisée en ce qu'elle comporte une installation d'inspection de surface d'une bande en défilement pour la mise en oeuvre d'un procédé d'inspection, caractérisée en ce qu'elle comporte des moyens de prise de vues d'au moins une des faces de la bande, une mémoire pour le stockage d'au moins une image de la bande sous forme de lignes et de colonnes d'éléments d'image associés chacun à une valeur numérique, un circuit de filtrage de ladite au moins une image numérique pour la détection d'irrégularités de surface par détection de variations relatives desdites valeurs numériques et une unité de traitement des signaux issus du dispositif de filtrage, comprenant un premier étage de segmentation de ladite au moins une image numérique en zones suspectes présentant chacune une irrégularité de surface et un deuxième étage de traitement d'image de zones suspectes pour l'identification du type de défaut de surface correspondant à ladite irrégularité, et en ce que le premier étage de segmentation comporte des premiers moyens de calcul d'un premier profil, de variation des valeurs numériques des éléments d'image dans une première direction, et des deuxièmes moyens de calcul d'un deuxième profil de variation des valeurs numériques dans une deuxième direction distincte de la première direction. Ledit étage de segmentation comporte des premiers moyens de calcul de la somme des valeurs numériques des éléments d'image de chaque colonne d'élément d'image pour l'élaboration d'un premier profil de variation des valeurs numériques et des deuxièmes moyens de calcul de la somme des valeurs numériques des éléments d'image de chaque ligne pour l'élaboration d'un deuxième profil de variation desdites valeurs numériques.

Cette installation peut en outre comporter les caractéristiques suivantes, prises isolément ou leur combinaison :

- l'installation comporte en outre des moyens de filtrage desdits profils, associés auxdits premier et deuxième moyens de calcul, et des moyens de seuillage reliés auxdits moyens de filtrage pour la délimitation desdites zones suspectes ;
- l'installation comporte, disposés en sortie du circuit de filtrage et reliés à la mémoire, des moyens de gestion de l'adressage des éléments image dans ladite mémoire, adaptés pour délimiter dans celle-ci des zones de stockage adaptées pour l'enregistrement de lignes successives d'éléments d'image comportant chacune au moins un élément d'image correspondant à au moins une irrégularité, lesdites zones de stockage ayant chacune une capacité maximale ;
- l'unité de traitement comporte en outre des moyens de calcul du nombre de lignes d'éléments d'image de zones suspectes stockées dans. des zones de stockage successives et correspondant a une même irrégularité et des moyens de comparaison dudit nombre de lignes avec un seuil de détection de défaut de grande longueur.

D'autres caractéristiques et avantages ressortiront de la description suivante, donnée uniquement à titre d'exemple et faite en référence aux dessins annexés sur lesquels :

- la figure 1 est un schéma général d'un mode de réalisation d'une installation d'inspection de surface selon l'invention ;
- la figure 2. représente une partie d'une image délivrée par les moyens de prise de vues de l'installation de la figure 1 et stockée dans la mémoire ;
- les figures 3a à 3e représentent différentes images de la surface d'une bande pendant une étape de division d'images ;
- la figure 4 est un organigramme illustrant le fonctionnement général de l'installation de la figure 1;
- la figure 5 est un organigramme montrant les différentes étapes de traitement des images numériques filtrées ;
- les figures 6a et 6b sont des schémas montrant, en fonction de la longueur et de la largeur des défauts de surface les différentes classes de défauts, respectivement pour un produit semi-fini (DKP) et pour un produit galvanisé ; et

- la figure 7 est un organigramme montrant les étapes d'un programme d'analyse de défaut de surface détectés.

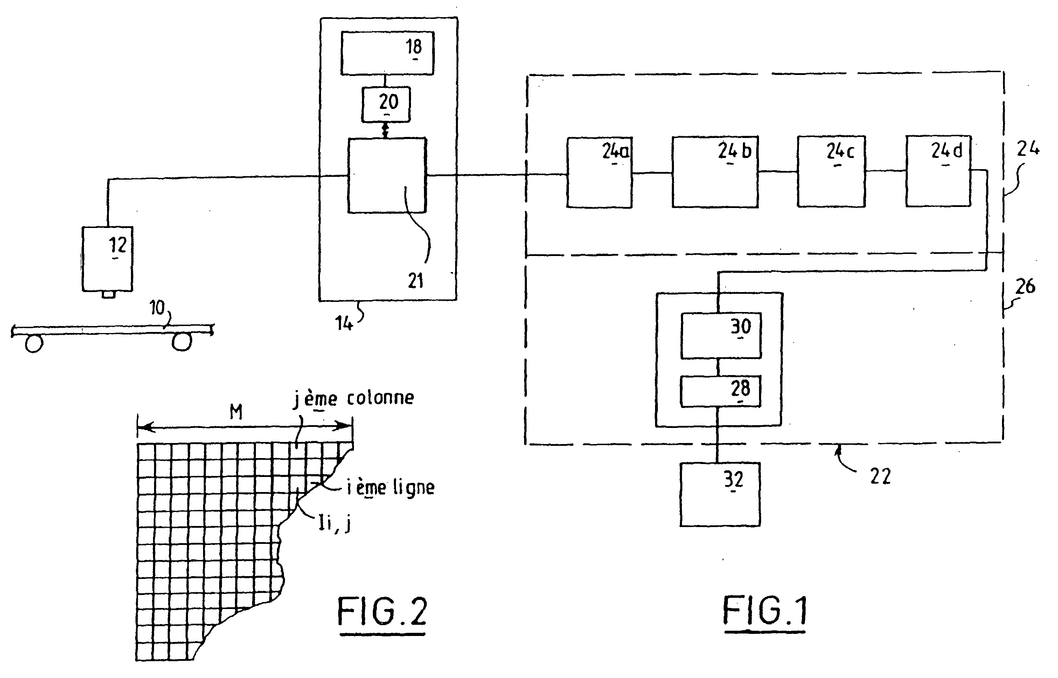

L'installation représentée sur la figure 1 est destinée à la détection de défaut de surface d'une bande 10 en cours de défilement à grande vitesse, par exemple une tôle laminée sortant d'une ligne de laminage.

Les surfaces de la tôle 10 sont inspectées au moyen d'un appareil de prise de vues 12 délivrant à un étage de filtrage 14 des images numériques de la surface de la bande.

Dans l'exemple de réalisation représenté, l'installation comporte un seul appareil de prise de vues 12 braqué sur une des surfaces de la bande, mais bien entendu, l'installation peut être équipée de deux appareils de vues adaptés pour former des images de chaque surface de la bande 10.

L'appareil de prise de vues 12 peut être constitué par tout type d'appareil approprié pour l'utilisation envisagée, dont la largeur de champ est sensiblement égale à la largeur de la zone d'inspection de la bande 10, laquelle zone d'inspection pouvant être constituée par la totalité de la largeur de bande. Il peut ainsi être constitué soit par une ou plusieurs caméras matricielles délivrant des images de longueur finie, en considérant le sens de défilement de la bande, soit par une caméra ou plusieurs caméras linéaires délivrant des images de longueur infinie.

Dans le cas où une caméra matricielle ou linéaire ne suffit pas pour couvrir toute la largeur de la zone d'inspection de la bande, on utilise plusieurs caméras réparties sur la largeur de la bande.

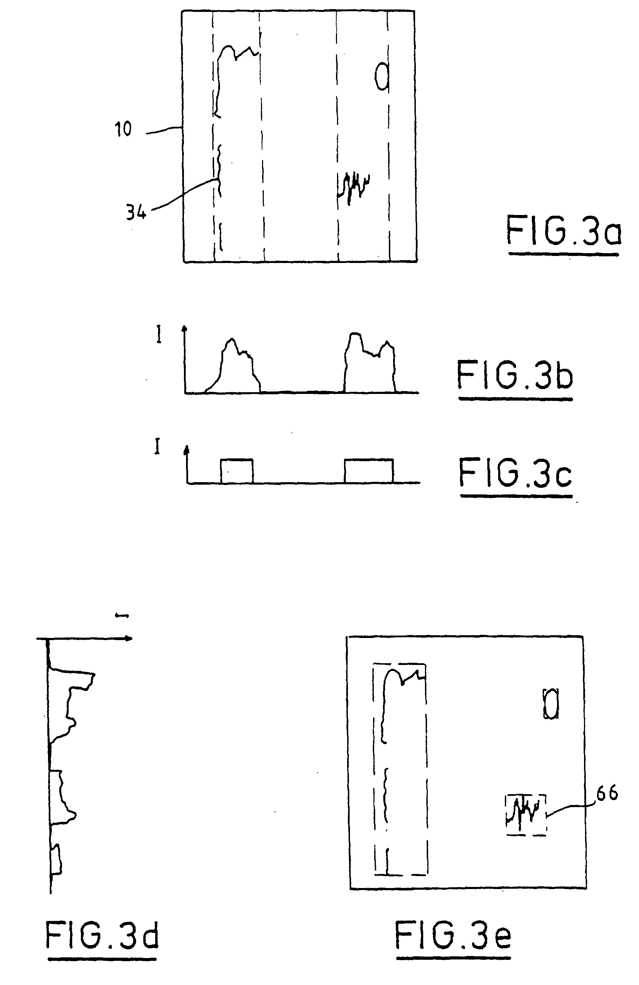

En référence à la figure 2, l'appareil de prise de vues 12 forme des lignes i de M éléments d'image $I_{i,j}$, ou pixels, adressables, pour un repère des pixels selon la longueur de la bande 10, par ligne n°i et, selon la largeur, par colonne n°j d'éléments d'image, chaque élément d'image étant associé à une valeur numérique représentative d'un niveau de gris.

Les lignes d'éléments d'image sont stockées dans une mémoire 18 de l'étage de filtrage sous la commande d'un circuit 20 de gestion.

Selon un premier exemple, l'appareil de prise de vues est constitué par une caméra linaire délivrant à la mémoire 18 10.000 lignes de 2048 pixels par seconde, ces lignes étant stockées dans la mémoire à des adresses successives.

Selon un autre exemple, l'appareil de prise de vues est constitué par deux caméras matricielles réparties sur la largeur de la bande pour couvrir la largeur de la bande et adaptées pour prendre 10 images/s. Chaque image délivrée par une seule caméra est constituée par 1024 lignes de 1024 pixels, délivrées à la mémoire 18.

Ainsi, le système de prise de vues débite en permanence des lignes d'éléments d'image, chaque élément d'image étant associé à une valeur numérique représentant un niveau de gris. On conçoit qu'il est cadencé par ligne s'il s'agit d'une caméra linéaire et cadencé par groupe de lignes s'il s'agit d'une caméra matricielle.

En se référant à nouveau à la figure 1, on voit que l'étage de filtrage 14 comporte en outre un circuit de filtrage 21 constitué par un opérateur de traitement d'images assurant la détection de variations relatives des valeurs numériques des éléments d'image ou pixels pour la détection d'irrégularités de surface.

De préférence, le circuit de filtrage est constitué par un circuit de détection de contour, par exemple un détecteur de type "Prewitt", détectant des variations de niveaux de gris entre des éléments d'image situés à proximité les uns des autres, ce qui permet de détecter des zones de la tôle 10 présentant des irrégularités de surface.

Comme le montre la figure 1, la sortie du circuit de filtrage 14 est reliée à une unité de traitement de signaux 22 comportant un premier étage 24 de segmentation des images numériques en zones d'éléments d'image délimitant chacune une irrégularité de surface détectée par l'étage de filtrage 14, et un deuxième étage 26 de traitement de signaux, constitué par un circuit de calcul 28 associé à une mémoire 30 correspondante, dans laquelle sont stockés des algorithmes de traitement pour la reconnaissance et l'identification de défaut de surface, pour chaque zone présentant une irrégularité de surface.

L'installation représentée sur la figure 1 est en outre munie d'un dispositif de visualisation 32 connecté en sortie de l'unité de traitement 22 dont une entrée est connectée à une sortie du circuit de calcul 28 et permettant la visualisation des défauts de surface détectés, associés à des informations relatives au type de défaut et à des paramètres représentatifs de la gravité de ces défauts, comme cela sera décrit en détail par la suite.

La description du fonctionnement de l'installation qui vient d'être décrite va maintenant être faite en référence aux figures 2 à 7.

Sur la figure 3a, on a représenté une partie de la tôle 10 qui présente un ensemble d'irrégularités de surface tel que 34.

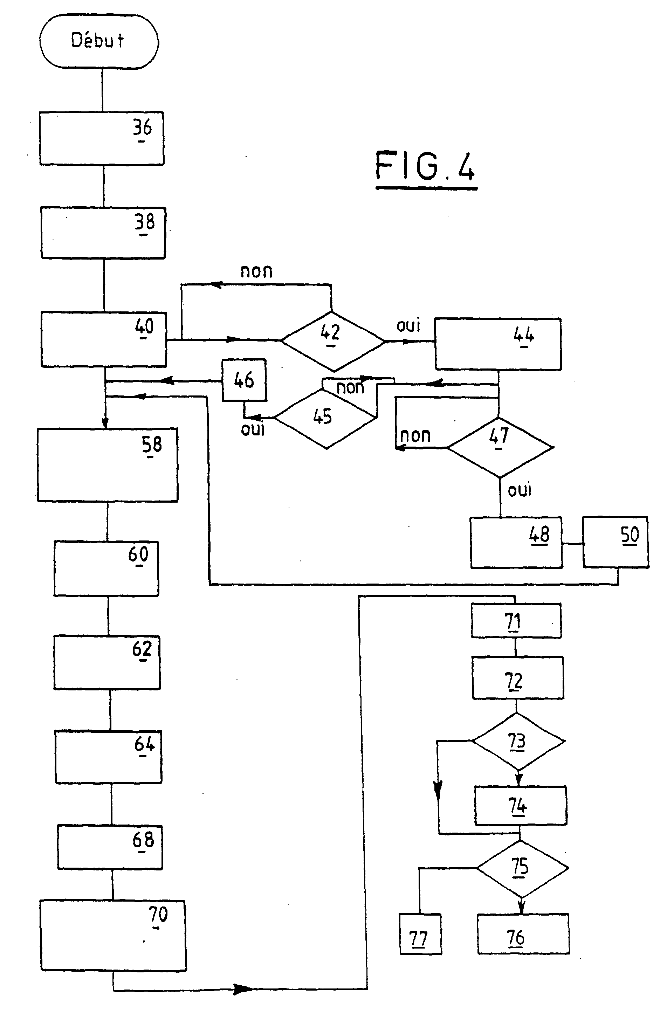

Le champ de l'appareil de prise de vues 12 couvre de préférence toute la largeur de la bande 10. En référence à la figure 4, au cours d'une première étape 36, l'appareil de prise de vues prend des lignes successives d'éléments d'images de la surface de la bande 10, ces éléments d'image étant stockés, dans la mémoire 18, associés à une valeur de niveau de gris.

Au cours de cette première étape 36 de prise de vues, le circuit de gestion 20 effectue, le cas échéant, une fusion des images délivrées par l'appareil de prise de vues 12, en regroupant les pixels successifs, d'une part dans le sens de la largeur de la bande 10 dans le cas où plusieurs caméras sont utilisées pour couvrir toute la largeur de la zone d'inspection, pour obtenir dans la mémoire 18 une image dont la largeur correspond à celle de la zone inspectée, et, d'autre part, dans le sens de la longueur de la bande 10, dans le cas où l'appareil de prise de vues 12 utilise une ou plusieurs caméras matricielles, en fusionnant les groupes de lignes de pixels successivement délivrés.

L'image, stockée dans la mémoire 18, dénommée par la suite "image brute", est constituée d'un ensemble d'éléments d'images $I_{i,j}$, i désignant l'adresse de la ligne dans la mémoire, variant de 1 à N, et j désignant le numéro d'un élément d'image de chaque ligne et variant de 1 à M, M étant égal à par exemple 2048, chaque élément d'image étant associé à une valeur numérique de niveau de gris.

Il est à noter que la valeur N dépend de la capacité de la mémoire. Cette capacité doit être adaptée pour la mémorisation d'un nombre suffisant de lignes eu égard au traitement ultérieur à réaliser. Par exemple, pour la mémorisation d'une image correspondant à une longueur de 15 m de tôle avec un nombre de lignes d'éléments d'image égal à 1024/m, N est de préférence égal à 15360 lignes.

Lorsque la capacité de la mémoire est saturée, des lignes arrivant successivement sont mémorisées à la place de lignes de pixels les plus anciennes et préalablement mémorisées et normalement traitées.

Lorsque la mémoire 18 est saturée et que lesdites lignes de pixels les plus anciennes n'ont pas été traitées, une alarme de saturation est émise pour indiquer qu'une zone de la bande ne sera pas inspectée.

Dans ce cas, on repère sur la bande la zone non inspectée, par identification et mémorisation dans un fichier des lignes successives non mémorisées, en vue par exemple d'une analyse statistique de portions de la bande non inspectées.

Toutefois, compte tenu de la vitesse moyenne de défilement de bande et de la densité moyenne d'irrégularités de surface à identifier pour un type de bande donné, on peut déterminer une puissance moyenne de calcul nécessaire correspondant à une vitesse de traitement moyenne au delà de laquelle on ne risque plus, en pratique, d'effacer des lignes non traitées.

De préférence, on dimensionne donc les modules de traitement pour que la vitesse instantanée de traitement soit supérieure à cette vitesse moyenne.

Ainsi, outre son rôle de fusion des images, la mémoire 18 assure un rôle de tampon permettant d'encaisser de variations, et en particulier des augmentations, de la charge de traitement due à une augmentation de la densité d'irrégularités de surface.

Au cours de l'étape 38 suivante, on associe à chaque image stockée dans la mémoire 18, une image binaire représentant des lignes de contour d'irrégularités de surface.

Pour ce faire, au cours de cette étape, les lignes successives d'éléments d'image brute sont filtrées par le circuit de filtrage 21, constitué comme mentionné précédemment par exemple par un filtre bidirectionnel de Prewitt de type classique, ayant pour fonction de détecter des variations de niveaux de gris des éléments d'image brute traduisant l'existence d'irrégularités de surface en vue de la détermination de leur contour inscrit dans l'image binaire associée.

Dans le mode de réalisation décrit, on considère que le filtre employé est un filtre de Prewitt, mais bien entendu, tout autre type de filtre adapté pour l'utilisation envisagée peut également être utilisé.

Le filtre de Prewitt assure un repérage de la position du contour d'irrégularité de surface en détectant, sur chaque ligne d'une image brute, des éléments d'image susceptibles d'appartenir à une ligne de contour d'irrégularité, ces éléments d'images étant désignés par la suite "pixels suspects".

Le filtre qu'on utilise ici affecte une valeur numérique "1" à chaque élément d'image binaire associé à chaque pixel suspect de l'image brute délivrée par l'appareil de prise de vues 12, les autres pixels de l'image binaire étant maintenus à 0.

Cette étape 38 de filtrage permet ainsi de former dans la mémoire 18 une image binaire constituée d'un ensemble d'éléments d'image binaires $B_{i,j}$ à chacun desquels est affectée une valeur binaire égale à 1 pour un pixel appartenant à un contour d'une irrégularité et égale à une valeur nulle pour un pixel n'appartenant pas à un contour d'une irrégularité de surface.

Au cours de l'étape 40 suivante, l'image binaire stockée dans la mémoire 18 est traitée à l'aide d'un opérateur classique de connectivité qui applique un masque à cette image pour forcer à la valeur numérique "1" des pixels de l'image binaire ayant une valeur nulle et situés entre deux éléments d'image suspects relativement proches, en vue d'obtenir et de définir des lignes continues pour chaque contour détecté.

Après avoir subi ce traitement, les images brutes et binaires sont nettoyées pour éliminer les taches délimitées par un contour dont la surface est inférieure à un seuil déterminé, par exemple de 3x3 pixels. On obtient alors une image binaire, superposée à l'image brute délivrée par l'appareil de prise de vues 12, et montrant les contours délimitant les irrégularités de surface détectées dans l'image brute. L'image binaire et l'image brute sont alors prêtes au traitement.

Au cours de l'étape 42 suivante, le circuit de gestion 20 analyse successivement chaque ligne de l'image binaire mémorisée, pour la détection des éléments binaires de valeur "1", c'est-à-dire suspects. Dès qu'un pixel suspect est détecté, le circuit de gestion 20 repère le numéro de la ligne correspondante, ouvre une zone de stockage de capacité prédéterminée sous la forme d'une fenêtre dans la mémoire 18 (étape 44) à partir de ce numéro de ligne et maintient cette fenêtre ouverte tant que le circuit de gestion détecte des pixels suspects dans les lignes suivantes.

Cette fenêtre, désignée par la suite par "fenêtre suspecte", contient ainsi des pixels suspects, c'est-à-dire susceptibles d'appartenir à une irrégularité de surface.

Le circuit de gestion 20 referme la fenêtre suspecte dès qu'aucun pixel suspect n'est plus détecté dans un nombre prédéterminé de lignes successives de l'image binaire, en enregistrant le numéro de la dernière ligne dans laquelle on a repéré un pixel suspect.

La fenêtre suspecte ainsi définie dans la mémoire 18 représente un segment d'image brute, associé à un segment d'image binaire correspondant, et contient au moins une irrégularité de surface que l'on cherche à identifier et à reconnaître.

En particulier, la fenêtre, ouverte lors de l'étape 44, est maintenue ouverte tant que le nombre des dernières lignes successives d'éléments d'image stockées dans ladite fenêtre ne contenant pas de pixel suspect ne dépasse pas un nombre de seuil prédéterminé de lignes binaires successives, ce seuil étant au moins égal à 1.

Ainsi, au cours de l'étape 45 suivante, le nombre des lignes successives d'éléments d'image ne contenant pas de pixel suspect est comparé à ce nombre de seuil et, en cas d'égalité, la fenêtre suspecte est fermée (étape 46).

Par ailleurs, lors de l'étape 47, le nombre de lignes enregistrées dans la fenêtre ouverte est comparé à un seuil prédéterminé dit de "détection de fenêtre de grande longueur" ou de "détection d'un défaut long".

Ce seuil prédéterminé correspond à la capacité maximale prédéterminée des zones de stockage dans la mémoire 18.

Si le nombre de lignes enregistrées est supérieur à ce seuil, la fenêtre est fermée (étape 48) et l'on décide, lors de l'étape 50 suivante, que la fenêtre est une fenêtre dite "suspecte de grande longueur", qui contient une irrégularité de surface dont le nombre de lignes d'éléments d'image est supérieur au seuil de détection de défaut long.

On notera également que, dans l'exemple de réalisation décrit, les fenêtres suspectes sont ouvertes de façon successive.

Le procédé d'inspection de surface se poursuit par des phases de division des fenêtres suspectes stockées dans la mémoire 18 en zones dites "zones suspectes" présentant chacune une irrégularité de surface, en utilisant soit la composante correspondant à l'image brute, soit la composante correspondant à l'image binaire.

Pour ce faire, l'étage 24 réalise, au cours des étapes 58 à 64 suivantes, un calcul, à l'aide de moyens appropriés, par exemple des moyens logiciels, du profil d'accumulation des valeurs numériques ou des valeurs binaires, respectivement pour chaque image brute ou chaque image binaire, d'une part dans le sens longitudinal et, d'autre part, dans le sens de la largeur, par projection des valeurs numériques ou des valeurs binaires selon deux axes perpendiculaires et par seuillage des profils de manière à délimiter des zones suspectes incorporant chacune une irrégularité de surface.

Bien que le calcul de ce profil puisse être effectué à partir des valeurs numériques associées aux éléments d'image de l'image brute ou à partir des valeurs binaires de l'image stockée après traitement, dans la suite de la description, on considérera que le traitement de l'image est effectué à partir de l'image binaire.

Cette opération de calcul débute par une phase de segmentation de chaque fenêtre suspecte en bande suspecte englobant des irrégularités, chaque bande étant ensuite segmentée en une ou plusieurs zones suspectes.

Tout d'abord, au cours de l'étape 58, l'étage 24 calcule, à l'aide d'un circuit de calcul 24-a (figure 1), la somme des valeurs binaires de chaque ligne de la fenêtre suspecte pour obtenir, sur M colonnes, un premier profil transversal, dans le sens de la largeur de la bande. On obtient ainsi la courbe représentée sur la figure 3b.

Au cours de l'étape 60 suivante, ce profil est présenté en entrée d'un circuit de cadrage 24-b, pour être cadré de manière à ne pas séparer des éléments d'image d'une irrégularité situés à proximité les uns des autres.

Le circuit de cadrage 24-b peut être constitué par tout type de filtre approprié, tel qu'un filtre RIF à réponse impulsionnelle finie, ou RII à réponse impulsionnelle infinie, mais est de préférence constitué par un filtre de type à fenêtre glissante permettant de délivrer un profil cadré r(x) dont les valeurs sont déterminé selon la relation suivante :

$$r(x) = \sum_{i=-K}^{K} F(x-i) \times Q(i) \qquad (1)$$

dans laquelle K désigne la largeur de la fenêtre glissante,

F(x-i) désigne la valeur de la colonne (x-i) du profil à cadrer,

Q désigne le coefficient du filtre à fenêtre glissante, choisi par exemple égal à 1, et

x désigne le numéro de colonne du profil cadré.

Le profil ainsi cadré est ensuite seuillé à l'aide d'un circuit de seuillage 24-c, au cours de l'étape 62 suivante, par comparaison avec une valeur de seuil de détection d'irrégularités.

On obtient ainsi le profil cadré et seuillé représenté sur la figure 3c délimitant des bandes suspectes, représentées à l'aide de pointillés sur la figure 3a, englobant chacune une ou plusieurs irrégularité de surface.

Comme mentionné précédemment, les bandes suspectes ainsi définies sont ensuite segmentées en zones suspectes présentant chacune une irrégularité de surface.

Pour ce faire, au cours de l'étape 64 suivante, les étapes 58,60 et 62 sont effectuées à nouveau et appliquées indépendamment à chaque ligne d'éléments d'image de chaque bande suspecte, de façon à obtenir un profil d'accumulation des valeurs binaires dans le sens longitudinal, comme représenté sur la figure 3d.

Ce profil longitudinal est ensuite cadré et seuillé, comme précédemment, pour obtenir l'image représentée sur la figure 3e dans laquelle sont définies des zones suspectes, telles que 66, qui délimitent chacune une irrégularité de surface détectée, chaque irrégularité pouvant, bien entendu, comporter plusieurs objets ou segments d'irrégularité.

Chaque zone suspecte ainsi définie contient donc un segment d'image brute et le segment d'image binaire correspondant.

De préférence, les zones suspectes 66 ainsi délimitées sont en outre présentées en entrée d'un deuxième circuit de calcul 24-d, connecté en sortie du circuit de seuillage 24-c, au moyen duquel les irrégularités de petites dimensions sont éliminées.

Pour ce faire, au cours de l'étape 68 suivante on traite de façon indépendante chaque zone suspecte de l'image binaire à l'aide d'un algorithme de labelisation classique en vue de délimiter des objets constitutifs d'une irrégularité de surface, chaque objet étant défini par un ensemble d'éléments d'image suspects en contact entre eux.

La surface de chaque objet est ensuite calculée, ainsi que la surface moyenne des objets appartenant à une même zone suspecte.

Les objets de petites dimensions sont éliminés du traitement. Pour ce faire, on décide d'éliminer les objets dont la surface individuelle est inférieure à un pourcentage prédéterminé de la surface moyenne calculée.

On obtient ainsi, en sortie du circuit de calcul 24-d, des zones suspectes contenant chacune une irrégularité, desquelles les petits objets ont été éliminés.

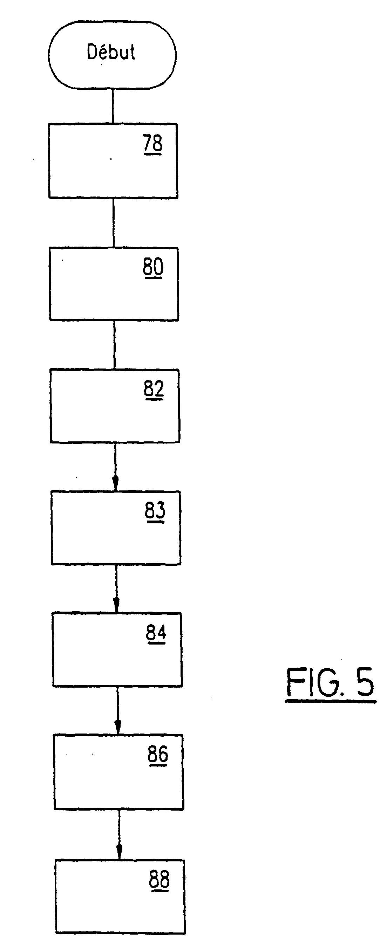

Ces zones suspectes ainsi nettoyées sont ensuite stockées dans la mémoire 30 du circuit de calcul 28 en vue d'être traitées, comme cela sera décrit en détail par la suite en référence à la figure 5.

Il est à noter que les circuits de calcul 24-a, de cadrage 24-b, et de seuillage 24-c et de calcul 24-d sont des circuits de type classique. Ils ne seront donc pas décrits en détail par la suite.

Dans le cas où une fenêtre suspecte a été qualifiée de fenêtre suspecte de grande longueur au cours de l'étape 50 précédente, l'étape de traitement des images est précédée d'une phase d'élimination du traitement de certaines zones suspectes, ce qui permet de diminuer la charge du circuit de calcul 28.

A cet effet, dès qu'on détecte (étapes 47,48 et 50) une fenêtre suspecte de grande longueur et qu'on la découpe en zones suspectes comme précédemment décrit, on repère au cours de l'étape 70 suivante au moins une zone suspecte de cette fenêtre dont la ligne inférieure d'éléments d'image appartient à celle de ladite fenêtre. Cette zone suspecte ainsi repérée est alors qualifiée de "zone suspecte coupée en bas".

La fenêtre suspecte suivant une fenêtre suspecte de grande longueur est qualifiée de "fenêtre suspecte de prolongement".

On conçoit qu'une fenêtre suspecte de prolongement peut également être de grande longueur.

Après découpage, comme précédemment décrit, d'une fenêtre suspecte de prolongement en zones suspectes, on repère l'au moins une zone suspecte de cette fenêtre dont la ligne supérieure d'éléments d'image appartient à celle de ladite fenêtre, cette zone suspecte étant alors qualifiée de "zone suspecte coupée en haut" ou "zone suspecte de prolongement" (étape 71).

On apparie les zones suspectes "coupées en bas" de la fenêtre de grande longueur et celles, "coupées en haut", de la fenêtre suspecte de prolongement (étape 72).

Au cours de l'étape 73 suivante on détermine si la fenêtre suspecte de prolongement est elle-même de grande longueur. Si tel est le cas, on repère au moins une zone suspecte de cette fenêtre dont la ligne inférieure d'éléments d'image appartient à celle de ladite fenêtre, cette zone suspecte étant alors qualifiée comme précédemment de "zone suspecte coupée en bas" et on effectue le même traitement de recomposition de cette zone suspecte avec les zones suspectes "coupées en haut" de la fenêtre suivante, dite de prolongement (étape 74).

Au fur et à mesure de l'appariement ou de l'association des zones suspectes coupées d'une fenêtre à la suivante, on met à jour la longueur de chaque défaut. Au cours de l'étape 75 suivante, l'unité de traitement 22 compare la longueur de chaque défaut avec la longueur d'une fenêtre de grande longueur, c'est-à-dire avec le seuil de détection de défaut long précédemment mentionné.

Dès que cette longueur dépasse celle d'une fenêtre de grande longueur, on qualifie le défaut comme étant un défaut long (étape 76) et on ouvre "un groupe défaut long" défini par une zone de la mémoire de l'étage de traitement dans lequel on place toutes les zones suspectes successives coupées et associées qui constituent en fait un seul et même défaut dit "défaut long".

On élimine ensuite du traitement d'image toutes les zones suspectes de prolongement qui appartiennent à des groupes "défaut long" ; ainsi, dans chaque groupe "défaut long", le traitement d'image n'est effectué que sur la première zone suspecte ("coupée en bas") et, pour simplifier le traitement, on affecte le résultat de ce traitement à toutes les zones suspectes de prolongement du même groupe "défaut long".

Au fur et à mesure de l'appariement ou de l'association des zones suspectes coupées d'une fenêtre à la suivante, en mettant à jour la longueur de chaque défaut associé à des zones suspectes qui se correspondent d'une fenêtre à la suivante, on peut constater au cours de l'étape 75 que ce défaut n'est pas un défaut long.

La segmentation d'un tel défaut ne peut pas avoir lieu sur plus de deux fenêtres successives, sinon il serait qualifié de défaut long.

Dans ce cas, on ouvre dans la mémoire 30 une zone de stockage sous la forme d'une zone suspecte dite "de recomposition" dans laquelle on place les deux zones suspectes coupées du même défaut, convenablement raboutées et centrées, la taille de ladite fenêtre étant adaptée pour cadrer ledit défaut comme dans le cas des zones suspectes non coupées (étape 77).

Les zones suspectes de recomposition sont ensuite traitées comme toutes les autres zones suspectes.

La phase de segmentation des images brutes et binaires en zones suspectes à traiter étant maintenant terminée, on procède alors au traitement de chaque zone suspecte délimitée lors des étapes 58 à 68, à l'exception des zones suspectes de prolongement de groupe "défaut long".

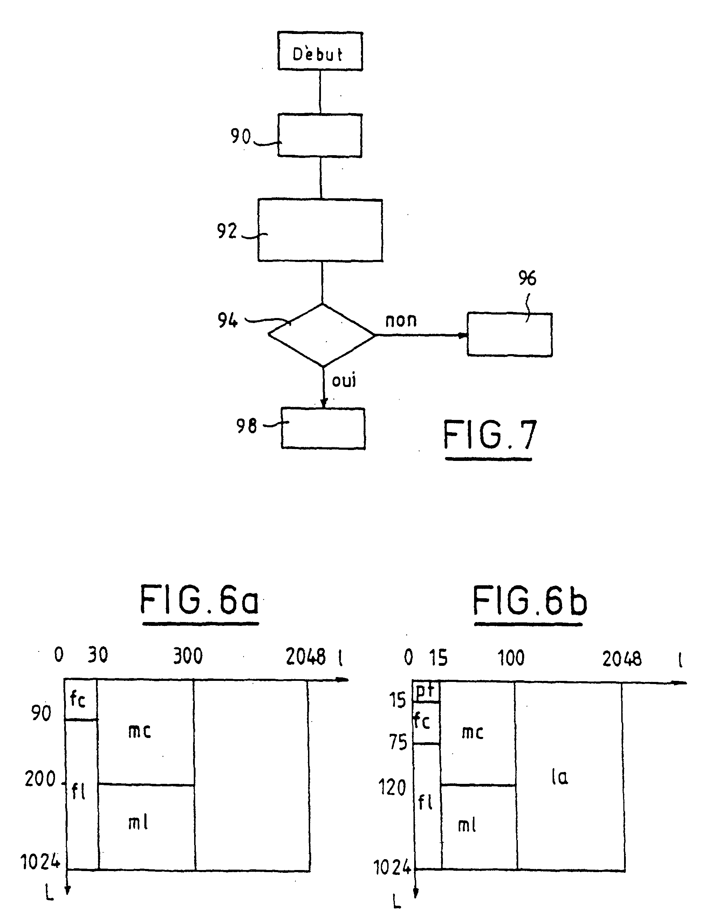

Le traitement de chaque zone suspecte va maintenant être décrit en référence aux figures 5 et 7.

Ce traitement débute par une étape 78 de calcul de paramètres d'identification de défaut, généralement qualifiée d'étape d'extraction de paramètres.

D'une manière connue en elle-même, on détermine la nature des paramètres susceptibles de caractériser les défauts ou les irrégularités de surface de la bande à inspecter, et nécessaires pour les reconnaître et les identifier de manière précise et fiable.

On détermine également le mode de calcul de ces paramètres, notamment en fonction de valeurs d'éléments d'image de l'image brute ou binaire d'une zone suspecte contenant ledit défaut ou ladite irrégularité de surface.

D'une manière classique, parmi ces paramètres on trouve généralement la longueur, la largeur et la surface d'une irrégularité de surface dans une zone suspecte, l'intensité moyenne des niveaux de gris des éléments de l'image brute à l'intérieur du défaut, l'écart type de ces niveaux de gris...

Le nombre de paramètres nécessaires pour une reconnaissance précise et fiable, désigné par la suite P, peut être très élevé et atteindre par exemple 65.

La nature et le mode de calcul des paramètres des défauts étant maintenant défini pour un type de bande à inspecter, on procède au calcul des P paramètres pour chaque zone suspecte.

Chaque zone suspecte ou irrégularité peut ainsi être représentée par un point dans un espace P-dimensionnel.

Ce nombre élevé P de paramètres est un handicap, eu égard au temps et aux moyens de traitement de reconnaissance des zones suspecte. Afin d'éviter, tout au moins de limiter, ce handicap, on effectue une étape de dégrossissage 80 qui permet de simplifier de façon considérable le traitement de chaque zone suspecte en classant les irrégularités selon un ensemble de classes de dégrossissage. Cette étape de dégrossissage, qui constitue une classification préalable des irrégularités, selon un ensemble de classes prédéfinies, permet de diviser le problème général de l'analyse des irrégularités en un ensemble de problèmes plus simples à traiter.

En particulier, à l'intérieur de chaque classe de dégrossissage, on définit un ensemble de classes élémentaires ou familles de défauts, dont le nombre est limité.

Pour pouvoir mettre en oeuvre l'étape de dégrossissage, il est nécessaire d'avoir prévu une phase préalable de définition des classes de dégrossissage et, éventuellement, de leur repère simplifié associé, généralement avant la mise en oeuvre du procédé selon l'invention.

Cette phase préalable est spécifique d'un type de bande à inspecter.

Comme exemple de phase préalable aboutissant a la définition de classes de dégrossissage, on procède par apprentissage de la façon suivante.

On procède à une inspection de surface, comme précédemment décrit jusqu'à ce stade du procédé, d'un nombre suffisant d'échantillons du même type de bande pour aboutir à une population suffisamment nombreuse et représentative de zones suspectes, dont chaque irrégularité est représentée par un point dans l'espace P-dimensionnel précédemment mentionné.

Selon la méthode connue par ailleurs d'analyse factorielle de correspondance, on repère comment ces points se regroupent en nuages dans cet espace.

On considère alors que chaque région de l'espace délimitant un nuage permet de définir une typologie de défauts, et les défauts d'un même nuage ont donc des éléments en commun et vont pouvoir être éventuellement représentés dans un repère simplifié propre à ce nuage ou à cette typologie.

Pour définir les axes d'un repère simplifié propre à une typologie ou à un nuage donné, on peut utiliser les axes principaux d'inertie de ce nuage, dont les positions et directions peuvent être calculées d'une manière connue en elle-même.

Ainsi, tous les défauts d'une même classe peuvent être représentés dans le même repère simplifié dans un espace dont la dimension est inférieure à P, c'est-à-dire que tous les défauts d'une même classe peuvent être caractérisés par un nombre réduit de paramètres, inférieur à P.

En faisant appel à des méthodes mathématiques classiques, on établit des matrices de changement de repère qui permettent de passer d'une représentation des défauts dans un espace P-dimensionnel à une représentation du même défaut dans un repère simplifié de dimensions réduites.

Ainsi, dans cette phase préalable destinée à préparer le dégrossissage, on a défini des typologies ou "classes de dégrossissage" de défauts et un repère simplifié de représentation de défaut, propre à chaque classe de dégrossissage.

Selon un exemple spécifique, ces classes de dégrossissage peuvent être définies à partir de la longueur (L) ou la largeur (1) des irrégularités ; en référence aux figures 6a et 6b, on définit par exemple 5 et 6 classes de dégrossissage, respectivement pour une tôle "DKP" et pour une tôle galvanisée, à savoir une classe de défauts petits (pt), une classe de défauts fins et courts (fc), une classe de défauts fins et longs (fl), une classe de défauts moyens et courts (mc), une classe de défauts moyens et longs (ml) et une classe de défauts larges (la) ; à chaque classe étant associé un repère simplifié de représentation.

Après l'étape d'extraction des paramètres, on peut maintenant mettre en oeuvre l'étape 80 de classification préalable ou de dégrossissage, proprement dite.

Pour ce faire, on répartit chaque défaut ou irrégularité de surface de zone suspecte dans les différentes classes de dégrossissage préalablement définies, en fonction de la valeur des P paramètres d'un défaut et des caractéristiques qui définissent ces classes.

Cette répartition préalable des défauts en classes de dégrossissage permet de simplifier considérablement la reconnaissance de défauts, en effectuant cette reconnaissance sur chaque classe de dégrossissage.

En variante, on représente tous les défauts d'une même classe dans le repère simplifié associé à cette classe, en utilisant la matrice de changement de repère de cette classe, appliquée aux P paramètres. On aboutit alors à une caractérisation simplifiée de tous les défauts, par un nombre réduit de paramètres, ce qui limite la quantité de calculs à effectuer lors de la reconnaissance.

L'étape 82 ultérieure du traitement consiste à reconnaître et à identifier les défauts de chaque classe de dégrossissage.

Le traitement d'identification et de reconnaissance est spécifique à chaque classe de dégrossissage et est généralement défini au préalable en fonction des types de défaut qu'on est susceptible de rencontrer dans chaque classe.

Ce traitement d'identification et de reconnaissance peut consister en une classification se basant par exemple sur la méthode dite des "sphères de Coulomb".

On peut également utiliser d'autres méthodes connues, comme la méthode d'analyse discriminante, la méthode de l'arbre de décision ou la méthode qui passe par la détermination du "K" plus proche voisin.

Selon la méthode des sphères de Coulomb, les typologies de défaut, spécifiques d'une classe de dégrossissage donnée, sont représentées par des sphères, repérables, en position et en taille, dans l'espace simplifié associé à cette classe.

Chaque sphère correspond à un type de défaut et/ou à un nom d'identification de défaut.

Ainsi, pour reconnaître et identifier un défaut d'une classe de dégrossissage donnée, on repère, lors de l'étape 83, à quelle sphère appartient le défaut et on attribue le nom d'identification associé à cette sphère (étape 84).

Avantageusement, cette opération de reconnaissance et d'identification peut être effectuée très rapidement parce que, le nombre de sphères et le nombre de paramètres étant réduits du fait de l'étape précédente de dégrossissage, les calculs de classification peuvent être réalisés sur un nombre réduit de critères.

Dans le cas particulier où, à l'intérieur d'une classe de dégrossissage donnée, on rencontrerait un défaut n'appartenant à aucune sphère, on lui attribue le nom d'identification de la sphère la plus proche.

Ainsi, à la fin de l'étape 84 d'affectation d'un nom d'identification de défaut à chaque irrégularité, toutes les irrégularités sont identifiées comme correspondant à un type particulier de défaut.

L'étape 86 suivante consiste à effectuer une deuxième classification en utilisant un deuxième étage de classification du circuit de calcul 28, à partir d'un nombre de classes réduit, afin, par exemple, de confirmer le résultat fourni par le premier étage de classification et de lever certaines incertitudes qui auraient pu apparaître dans l'identification de certains défauts, ou afin, par exemple, de différencier en typologie plus resserrée des défauts d'un même type que l'on aurait décidé de ne pas différencier au niveau du premier étage de classification, faute de performances suffisantes de classification à ce niveau.

Pour pouvoir mettre en oeuvre cette deuxième étape 86 de classification, il est nécessaire d'avoir prévu une phase préalable de qualification de chaque classe élémentaire.

Dans cette phase préalable, on effectue des traitements statistiques de validation ou de non validation de la classification effectuée pour l'identification des défauts, en utilisant le procédé qui vient d'être décrit, de manière à repérer les classes élémentaires qui contiennent le plus d'erreurs de classement de défaut.

Ces classes élémentaires, en nombre réduit, -qui contiennent le plus grand nombre d'erreurs de classement, sont qualifiées de "classes élémentaires d'identification incertaine", les autres, qui contiennent le moins d'erreurs de classement, sont qualifiées de "classes élémentaires d'identification certaine".

La deuxième classification, mise en oeuvre dans l'étape 86, n'est effectuée que sur les défauts ou irrégularités classés dans les classes élémentaires d'identification incertaine.

Le deuxième étage de classification utilise par exemple l'une des méthodes de classification mentionnées précédemment.

Il est adapté par exemple pour valider ou non l'appartenance des défauts à ces classes d'identification incertaine. En cas de non validation, le défaut est alors considéré comme n'étant pas un défaut et est éliminé du traitement.

Il peut être également adapté pour répartir les défauts de certaines classes élémentaires d'identification incertaine dans des classes d'identification précise, prédéfinies selon une typologie plus resserrée.

Il est à noter que cette classification supplémentaire porte sur un nombre très réduit de classes de défauts et peut donc être effectuée très rapidement.

A l'issue de ces étapes 80 à 86, chaque défaut est identifié et reconnu, c'est-à-dire affecté à une classe élémentaire.

La phase de traitement d'images s'achève par une étape 88 de fusion des données au cours de laquelle certains défauts sont regroupés, en utilisant des critères préalablement définis, portant notamment sur la géométrie et la topologie des défauts (par exemple : distance des défauts entre eux, position identique au dessus et en dessous de la bande, proximité du bord de bande,...).

Cette phase de fusion permet de remédier à certaines imperfections susceptibles d'apparaître lors de la reconnaissance des défauts et de résoudre quelques problèmes particuliers de confusion, sans remettre en cause les résultats déjà confirmés.

La décision de regroupement de défauts se fait après confrontation d'informations en provenance du proche voisinage d'un objet à reconnaître, de l'ordre du mètre par exemple, d'autres appareils de prise de vues (par exemple braqué vers l'autre face de la bande), ou de données relatives au traitement de la bande (nature de la bande, point d'arrêt,...).

En particulier, on décide de regrouper entre eux des défauts pour lesquels une ambiguïté sur le nom subsiste, ainsi que des défauts de même nature.

Par ailleurs, on regroupe les défauts présentant des relations de proximité particulières, par exemple à savoir les défauts situés à proximité, sur une même face de la bande ou sur un face opposée, ainsi que les défauts situés dans le même alignement longitudinal ou transversal.

Ainsi, par exemple, dans le cas d'une tôle galvanisée, un défaut de type "traînée granuleuse" se traduit par une multitude d'irrégularités de surface situées au voisinage de la rive de la tôle. Dans ce cas, l'identification du défaut n'est pas totalement fiable. En effet, chacune de ces irrégularités peut être reconnue comme appartenant à une "traînée granuleuse", ou être reconnue individuellement comme un défaut d'un autre type, notamment une "exfoliation", ou une "boursouflure".

Dans ce cas particulier, on fusionne les irrégularités situées au voisinage de la rive de la tôle et alignées les unes par rapport aux autres et on les identifie comme appartenant à un défaut de type "traînée granuleuse".

De même, selon un autre exemple, on regroupe, au cours de cette étape de fusion, les défauts situés dans la même position, sur les faces supérieure et inférieure de la tôle et on leur donne un nom identique.

Au cours de cette étape de fusion et comme décrit précédemment, en référence à l'étape 76 de la figure 4, on regroupe également les défauts longs, coupés lors de l'ouverture des fenêtres suspectes, en affectant, comme mentionné précédemment, le nom du défaut de la zone suspecte de grande longueur aux défauts des zones suspectes de prolongement du même groupe.

Au cours de cette étape de fusion, on analyse également la population de chaque classe élémentaire de défaut sur une longueur donnée de bande, c'est-à-dire le nombre de défauts par unité de longueur présentant la même identification.

On compare ensuite cette population à un seuil prédéterminé, appelé seuil de présomption de défaut périodique. Ce seuil est déterminé pour la même longueur donnée de bande.

Lorsque la population d'une classe élémentaire dépasse ledit seuil, on considère que des défauts de cette classe présentent vraisemblablement un caractère périodique.

Pour valider ce caractère, on peut utiliser une méthode classique de détection de défauts périodiques.

Par exemple, on trace l'histogramme de la distance entre chaque défaut de cette classe et, si cet histogramme met en évidence une périodicité (fondamentale ou harmonique), on ouvre dans la mémoire un groupe spécifique "défaut périodique" et on regroupe dans ce même groupe les défauts périodiques de cette classe.

Selon une variante, cette étape de détection et de regroupement des défauts périodiques peut être réalisée après l'extraction des paramètres mais avant l'identification et la reconnaissance, voire avant le dégrossissage ou classification préalable.

Cette variante suppose alors un traitement de classification spécifique, relativement sommaire puisqu'il doit se baser sur la caractérisation des défauts selon un nombre élevé P de paramètres et, pour la détection des défauts périodiques, on analyse alors la population des classes élémentaires définies dans cette classification spécifique.

Cette variante présente l'avantage d'afficher un résultat qui ne dépend pas des performances des modules de reconnaissance (dégrossissage et classification aval).

Après avoir détecté, reconnu et éventuellement regroupé les défauts correspondant à des irrégularités détectées, la phase ultérieure du procédé d'inspection consiste à analyser les défauts en vue d'en déterminer la gravité, pour permettre la détermination de la défectuosité de la bande. Cette phase va maintenant être décrite en référence à la figure 7.

Préalablement, avant le mise en oeuvre du procédé, pour chaque classe ou chaque type de défaut, en fonction de différentes nocivités intrinsèques possible du type de défaut, on définit un ensemble de sous-classes, chaque sous-classe étant associée à une nocivité intrinsèque possible du type de défaut. Chaque sous-classe peut éventuellement être affectée d'un coefficient de gravité intrinsèque.

On conçoit que chaque irrégularité de surface est à ce stade, identifiée et donc caractérisée par des paramètres caractéristiques, en particulier par un nombre réduit de paramètres.

Lors de la première étape 90 de cette phase d'analyse des défauts on assimile les défauts, regroupés dans un groupe de fusion dans l'étape précédente, à un seul défaut dit "défaut de fusion". A cet effet, pour ces défauts regroupés, on calcule les paramètres caractérisant le défaut de fusion par combinaison linéaire des valeurs des paramètres caractérisant chaque défaut ou irrégularité du groupe de fusion.

A partir des valeurs des paramètres caractérisant les défauts non regroupés et les défauts de fusion, on effectue, lors de l'étape 92 suivante, une classification supplémentaire de ces défauts selon l'ensemble de sous-classes propre à chaque type de défaut.

Cette classification supplémentaire peut être réalisée selon le même type de méthodes que celles utilisées lors de la reconnaissance des défauts.

Cette classification supplémentaire aboutit à un résultat indépendant des utilisations ultérieures de la tôle.

A l'issue de cette classification supplémentaire, on peut définir un "profil de défectuosité intrinsèque" de bande par une liste donnant la population de chaque sous-classe "gravité" de chaque type ou "classe élémentaire" de défaut, cette population étant rapportée à une unité de longueur de bande ; ce profil peut être par exemple représenté sous forme d'histogrammes de la population de chaque sous-classe, disposés côte à côte dans un ordre prédéterminé (sous-classes après sous-classes, classes après classes).

Parallèlement, pour une utilisation donnée de la bande, on peut définir suivant le même formalisme (par exemple: histogrammes dans le même ordre) un "profil de défectuosité admissible", à savoir, pour chaque sous-classe "gravité" de chaque type de défaut possible, une population maximum admissible pour cette utilisation donnée (toujours rapportée à la même unité de longueur de bande).

Ce "profil de défectuosité admissible" n'est pas défini "une fois pour toute" pour une utilisation donnée; il peut même varier en fonction, par exemple, de l'évolution du cahier des charges de cette utilisation.

On compare ensuite, à l'étape 94, le profil de défectuosité intrinsèque de la bande inspectée au profil de défectuosité admissible de l'utilisation souhaitée de ladite bande.

Ainsi, au cours de l'étape 94, si on constate que le profil de défectuosité intrinsèque de la bande inspectée rentre (ou est contenu) dans le profil de défectuosité admissible de l'utilisation envisagée de cette bande, cette bande est considérée comme acceptable ou validée pour cette utilisation (étape 96).

Si tel n'est pas le cas, cette bande inspectée est considérée comme inacceptable ou "défectueuse" vis à vis de cette utilisation (étape 98).

Dans le but d'éviter de mettre cette bande inspectée au rebut, on recherche alors l'utilisation dans le profil de défectuosité admissible de laquelle le profil de défectuosité intrinsèque de cette bande inspectée rentre (ou est contenu), et on affecte cette bande à cette autre utilisation.

On sait en effet qu'une tôle présentant un nombre prédéterminé de défauts d'une gravité donnée et d'un type particulier peut n'être pas défectueuse pour une utilisation, mais peut être défectueuse pour une autre utilisation.

Par exemple, une tôle présentant une rayure est défectueuse si elle n'est pas laminée lors d'une étape de traitement ultérieure mais est considérée comme n'étant pas défectueuse si elle est relaminée, les rayures étant dès lors écrasées.

L'avantage déterminant de ce procédé d'évaluation de la défectuosité d'une bande par mesure d'un profil de défectuosité intrinsèque est que cette mesure est indépendante de l'utilisation ultérieure et aval de la bande, et de l'évolution concernant les critères à satisfaire pour cette utilisation.

Avantageusement, les profils de défectuosité intrinsèque des bandes inspectées peuvent servir, à l'inverse, à suivre l'évolution et les dérives éventuelles des procédés de fabrication de ces bandes, selon par exemple les campagnes de fabrication ; on peut ainsi par exemple repérer d'éventuelles dérives du comportement de la chaîne de laminage en amont.

Les profils de défectuosité intrinsèque des bandes inspectées peuvent également servir à identifier des dérives sur le système d'inspection lui-même.

Selon une variante simplifiée de procédé d'analyse de la défectuosité, on peut affecter, à chaque sous-classe "gravité" des types de défauts, un coefficient dont la valeur est fonction de la gravité estimée pour une utilisation donnée, et définir le profil de défectuosité d'une bande par la somme des populations de chaque sous-classes multipliées par le coefficient correspondant. Pour valider cette utilisation, on vérifie alors simplement que le résultat obtenu, à savoir ladite somme, ne dépasse par une valeur prédéterminée définie pour cette utilisation.

D'autres variantes simplifiées, basées sur l'utilisation de coefficients, peuvent être envisagées.

**Revendications**

1. Procédé d'inspection de surface d'une bande en défilement, pour la détection de défaut de surface, comprenant les étapes consistant à :

   - former, à l'aide de moyens de prise de vues (12), au moins une image numérique d'au moins une des faces de la bande (10), constituée d'un ensemble de lignes successives d'éléments d'images ($I_{i,j}$, $B_{i,j}$), affectés chacun d'une valeur numérique;
   - filtrer ladite au moins une image numérique pour la détection d'irrégularités de surface (34), par détection de variations relatives desdites valeurs numériques ,
   - segmenter ladite au moins une image numérique en zones suspectes (66) de sorte que chaque zone suspecte (66) contienne une irrégularité de surface (34) ; et
   - traiter les zones suspectés (66) pour 1' identification du type de défaut de surface correspondant à chaque irrégularité (34) détectée ;

   **caractérisé en ce que** l'étape de segmentation de ladite au moins une image consiste à calculer un premier profil d'accumulation des valeurs numériques des éléments d'image ($I_{i,j}$ , $B_{i,j}$) dans une première direction, à seuiller ledit profil calculé de manière à délimiter des bandes d'éléments d'image présentant chacune au moins une irrégularité de surface (34), à calculer, pour chaque bande délimitée, un deuxième profil d'accumulation des valeurs numériques dans une deuxième direction distincte de la première direction, et à seuiller ledit deuxième profil calculé pour délimiter lesdites zones suspectes (66) contenant chacune une irrégularité de surface, **en ce que** ladite étape de calcul dudit premier profil comprend le calcul de la somme des valeurs numériques de chaque colonne d'éléments d'image ($I_{i,j}$, $B_{i,j}$), et **en ce que** ladite étape de calcul dudit deuxième profil comprend le calcul, pour chaque bande, de la somme des valeurs numériques de chaque ligne d'éléments d'image ($I_{i,j}$, $B_{i,j}$).

2. Procédé selon la revendication 1, **caractérisé en ce que**, postérieuremerit à l'étape de segmentation des images en zones suspectes (66), on calcule, pour chaque zone (66), la surface individuelle de portions de la zone, constituées chacune d'éléments d'image ($I_{i,j}$ , $B_{i,j}$) représentant un segment d'irrégularité, et on élimine les segments d'irrégularité dont la surface est inférieure à un seuil prédéfini.

3. Procédé selon l'une des revendications 1 et 2, **caractérisé en ce que** ladite étape de formation d'images comprend la formation d'un ensemble d'images de parties successives de la bande (10) en défilement, sous forme de lignes et de colonnes d'éléments d'images ($I_{i,j}$, $B_{i,j}$), et la fusion desdites images en une imagé, en mémorisant lesdites lignes dans une mémoire (18) à des adresses successives.

4. Procédé selon l'une quelconque des revendications 1 à 3, **caractérisé en ce que**, postérieurement à l'étape de filtrage de l'image mémorisée, on délimite dans ladite mémoire (18) une zone de stockage, en réponse à une détection d'un élément d'image d'une irrégularité, dans laquelle sont stockées des lignes d'éléments d'image successivement délivrées par les moyens de prise de vues (12) et comportant au moins un élément d'image correspondant au moins une irrégularité, ladite étape de segmentation étant effectuée sur chaque zone de stockage.

5. Procédé selon la revendication 4, **caractérisé en ce que** la zone de stockage, ouverte dans la mémoire (18) en réponse à une détection d'un élément d'image d'au moins une irrégularité, est fermée dès qu'aucun élément d'image d'une irrégularité n'est plus détecté dans un nombre prédéterminé de lignes d'éléments d'image. ($I_{i,j}$, $B_{i,j}$).

6. Procédé selon l'une des revendications 4 et 5, **caractérisé en ce qu'**il comporte en outre une étape de détection de zones de stockage de grande longueur, par comparaison du nombre de lignes d'élément d'image ($I_{i,j}$, $B_{i,j}$),

stockées dans chaque zone de stockage, avec un seuil prédéterminé de détection de zones de stockage de grande longueur, ladite zone de stockage étant fermée en cas de dépassement dudit seuil.

7. Procédé selon la revendication 6, **caractérisé en ce que**, postérieurement à l'étape de segmentation d'image en zones suspectes (66), on forme un groupe de zones suspectes (66) en appariant des zones suspectes (66) de zones de stockage successives, dont au moins l'une est une zone de stockage de grande longueur, et correspondant à une même irrégularité (34), et lorsque le nombre total des lignes d'éléments d'image des zones suspectes (66) dudit groupe est supérieur à un seuil de détection de défaut de grande longueur, on effectue l'étape de traitement d'image sur l'une desdites zones suspectes (66) audit groupe et l'on affecte le résultat du traitement aux autres zones suspectes (66) audit groupe.

8. Procédé selon l'une quelconque des revendications 1 à 7, **caractérisé en ce que** ladite étape de filtrage des images numériques consiste à détecter les contours de chaque irrégularité (34).

9. Installation d'inspection de surface d'une bande (10) en défilement pour la mise en oeuvre d'un procédé d'inspection selon l'une quelconque des revendications 1 à 10, **caractérisée en ce qu'**elle comporte des moyens de prise de vues (12) d'au moins une des faces de la bande (10), une mémoire (18) pour le stockage d'au moins une image de la bande sous forme de lignes et de colonnes d'éléments d'image ($I_{i,j}$, $B_{i,j}$) associés chacun à une valeur numérique, un circuit de filtrage (21) de ladite au moins une image numérique pour la détection, d'irrégularités de surface (34) par détection de variations relatives desdites valeurs numériques et une unité de traitement (22) des signaux issus du circuit de filtrage (21), comprenant un premier étage (24) de segmentation de ladite au moins une image numérique en zones suspectes (66) présentant chacune une irrégularité de surface (34) et un deuxième étage (26) de traitement d'image de zones suspectes (66) pour 1' identification du type de défaut de surface correspondant à ladite irrégularité, et **en ce que** le premier étage (24) de segmentation comporte des premiers moyens (24-a) de calcul d'un premier profil d'accumulation des valeurs numériques des éléments d'image ($I_{i,j}$, $B_{i,j}$) dans une première direction, et des deuxièmes moyens (24-b) de calcul d'un deuxième profil d'accumulation des valeurs numériques dans une deuxième direction distincte de la première direction, **en ce que** les premiers moyens de calcul comportent des moyens de calcul (24-a) de la somme des valeurs numériques des éléments d'image ($I_{i,j}$, $B_{i,j}$) de chaque colonne d'élément d'image pour l'élaboration du premier profil d'accumulation des valeurs numériques et **en ce que** les deuxièmes moyens de calcul comportent des moyens de calcul (24-a) de la somme des valeurs numériques des éléments d'image ($I_{i,j}$, $B_{i,j}$) de chaque ligne pour l'élaboration du deuxième profil d'accumulation desdites valeurs numériques.

10. Installation selon la revendication 9, **caractérisée en ce qu'**elle comporte en outre des moyens de filtrage (24-b) desdits profils, associés auxdits premier et deuxième moyens de calcul, et des moyens de seuillage (24-c) reliés auxdits moyens de filtrage (24-b) pour la délimitation desdites zones suspectes.

11. Installation selon l'une des revendications 9 et 10, **caractérisée en ce qu'**elle comporte, disposés en sortie du circuit de filtrage (21) et reliés à la mémoire (18), des moyens (20) de gestion de l'adressage des éléments image ($I_{i,j}$, $B_{i,j}$) dans ladite mémoire (18), adaptés pour délimiter dans celle-ci des zones de stockage adaptées pour l'enregistrement de lignes successives d'éléments d'image comportant chacune au moins un élément d'image correspondant à au moins une irrégularité (34), lesdites zones de stockage ayant chacune une capacité maximale.

12. Installation selon la revendication 11, **caractérisée en ce que** l'unité de traitement (22) comporte en outre des moyens de calcul du nombre de lignes d'éléments d'image de zones suspectes stockées dans des zones de stockage successives et correspondant à une même irrégularité (34) et des moyens de comparaison audit nombre de lignes avec un seuil de détection de défaut de grande longueur.

**Patentansprüche**

1. Verfahren zur Kontrolle der Oberfläche eines laufenden Bandes zur Erfassung von Oberflächenfehlern, umfassend die Schritte, die darin bestehen,

   - daß mit Hilfe von Bildaufnahmemitteln (12) mindestens ein digitales Bild mindestens einer der Seiten des Bandes (10) hergestellt wird, das aus einer Anzahl von aufeinanderfolgenden Zeilen von Bildelementen ($I_{i,j}$, $B_{i,j}$) besteht, denen jeweils ein digitaler Wert zugeteilt ist;
   - daß dieses mindestens eine digitale Bild für die Erfassung von Oberflächenunregelmäßigkeiten (34) durch Erfassung von relativen Änderungen dieser digitalen Werte gefiltert wird,

- daß dieses mindestens eine Bild so in verdächtige Zonen (66) segmentiert wird, daß jede verdächtige Zone (66) eine Oberflächenunregelmäßigkeit (34) enthält; und
- daß die verdächtigen Zonen (66) für die Identifizierung des jeder erfaßten Unregelmäßigkeit (34) entsprechenden Oberflächentyps behandelt werden;

**dadurch gekennzeichnet, daß** der Schritt der Segmentierung dieses mindestens einen Bildes darin besteht, daß ein erstes Profil der Akkumulation der digitalen Werte der Bildelemente ($I_{i,j}$, $B_{i,j}$) in einer ersten Richtung berechnet wird, dieses berechnete Profil einer Schwellenwert-Setzung unterzogen wird, so daß Bänder von Bildelementen begrenzt werden, die jeweils mindestens eine Oberflächenunregelmäßigkeit (34) aufweisen, bei jedem begrenzten Band ein zweites Profil der Akkumulation der digitalen Werte in einer zweiten Richtung, die von der ersten Richtung verschieden ist, berechnet wird und dieses zweite berechnete Profil einer Schwellenwert-Setzung unterzogen wird, um die verdächtigen Zonen (66) zu begrenzen, die jeweils eine Oberflächen unregelmäßigkeit enthalten, daß dieser Schritt der Berechnung des ersten Profils die Berechnung der Summe der digitalen Werte von jeder Spalte von Bildelementen ($I_{i,j}$, $B_{i,j}$) umfaßt, und daß dieser Schritt der Berechnung des zweiten Profils bei jedem Band die Berechnung der Summe der digitalen Werte jeder Zeile von Bildelementen ($I_{i,j}$, $B_{i,j}$) umfaßt.

2. Verfahren nach Anspruch 1, **dadurch gekennzeichnet, daß** man nach dem Schritt der Segmentierung der Bilder in verdächtige Zonen (66) für jede Zone (66) die Einzelfläche von Abschnitten der Zone berechnet, die jeweils von Bildelementen ($I_{i,j}$, $B_{i,j}$) gebildet sind, die ein Unregelmäßigkeitssegment darstellen, und die Unregelmäßigkeitssegmente eliminiert, deren Fläche kleiner als eine vordefinierte Schwelle ist.

3. Verfahren nach einem der Ansprüche 1 und 2, **dadurch gekennzeichnet, daß** der Schritt der Herstellung von Bildern die Herstellung einer Anzahl von Bildern von aufeinanderfolgenden Teilen des vorbeilaufenden Bandes (10) in Form von Zeilen und Spalten von Bildelementen ($I_{i,j}$, $B_{i,j}$) und die Verschmelzung dieser Bilder zu einem Bild umfaßt, indem diese Zeilen in einem Speicher (18) an aufeinanderfolgenden Adressen gespeichert werden.

4. Verfahren nach einem der Ansprüche 1 bis 3, **dadurch gekennzeichnet, daß** man nach dem Schritt der Filterung des gespeicherten Bildes in dem Speicher (18) als Antwort auf eine Erfassung eines Bildelements einer Unregelmäßigkeit eine Speicherzone begrenzt, in der Zeilen von Bildelementen gespeichert sind, die nacheinander von den Bildaufnahmemitteln (12) geliefert werden und mindestens ein Bildelement umfassen, das mindestens einer Unregelmäßigkeit entspricht, wobei dieser Schritt der Segmentierung auf jeder Speicherzone durchgeführt wird.

5. Verfahren nach Anspruch 4, **dadurch gekennzeichnet, daß** die Speicherzone, die in dem Speicher (18) als Antwort auf eine Erfassung eines Bildelements mindestens einer Unregelmäßigkeit geöffnet wird, geschlossen wird, sobald kein Bildelement einer Unregelmäßigkeit mehr in einer vorbestimmten Anzahl von Zeilen von Bildelementen ($I_{i,j}$, $B_{i,j}$) erfaßt wird.

6. Verfahren nach einem der Ansprüche 4 und 5, **dadurch gekennzeichnet, daß** es außerdem einen Schritt der Erfassung von Speicherzonen großer Länge durch Vergleich der Anzahl von Zeilen von Bildelementen ($I_{i,j}$, $B_{i,j}$), die in jeder Speicherzone gespeichert sind, mit einer vorbestimmten Schwelle der Erfassung von Speicherzonen großer Länge umfaßt, wobei diese Speicherzone im Fall des Überschreitens dieser Schwelle geschlossen wird.

7. Verfahren nach Anspruch 6, **dadurch gekennzeichnet, daß** man nach dem Schritt der Segmentierung des Bildes in verdächtige Zonen (66) eine Gruppe von verdächtigen Zonen (66) bildet, indem man ein und derselben Unregelmäßigkeit (34) entsprechende, verdächtige Zonen (66) von aufeinanderfolgenden Speicherzonen einander zuordnet, von denen mindestens eine eine Speicherzone großer Länge ist, und, wenn die Gesamtanzahl von Zeilen von Bildelementen der verdächtigen Zonen (66) dieser Gruppe höher als eine Schwelle der Erfassung von Fehlern großer Länge ist, den Schritt der Bildverarbeitung auf einer dieser verdächtigen Zonen (66) dieser Gruppe durchführt und das Ergebnis der Verarbeitung den anderen verdächtigen Zonen (66) dieser Gruppe zuordnet.

8. Verfahren nach einem der Ansprüche 1 bis 7, **dadurch gekennzeichnet, daß** der Schritt der Filterung der digitalen Bilder darin besteht, daß die Umrisse jeder Unregelmäßigkeit (34) erfaßt werden.

9. Anlage zur Kontrolle der Oberfläche eines laufenden Bandes (10) zur Durchführung eines Kontrollverfahrens nach einem der Ansprüche 1 bis 10, **dadurch gekennzeichnet, daß** sie Bildaufnahmemittel (12) zum Aufnehmen mindestens einer der Seiten des Bandes (10), einen Speicher (18) zum Speichern mindestens eines Bildes des Bandes in Form von Zeilen und Spalten von Bildelementen ($I_{i,j}$, $B_{i,j}$), denen jeweils ein digitaler Wert zugeordnet ist, einen Kreis (21) zum Filtern dieses mindestens einen digitalen Bildes für die Erfassung von Oberflächenunregelmäßigkeiten (34) durch Erfassung von relativen Änderungen dieser digitalen Werte und eine Einheit (22) zur Verarbeitung der von dem Filterkreis (21) kommenden Signale aufweist, die eine erste Stufe (24) der Segmentierung dieses mindestens einen digitalen Bildes in verdächtige Zonen (66), die jeweils eine Oberflächenunregelmäßigkeit (34) aufweisen, und eine zweite Stufe (26) der Verarbeitung des Bilds von verdächtigen Zonen (66) zur Identifizierung des dieser Unregelmäßigkeit entsprechenden Oberflächenfehlertyps umfaßt, und daß die erste Stufe (24) der Segmentierung erste Mittel (24-a) zur Berechnung eines ersten Profils der Akkumulation der digitalen Werte der Bildelemente ($I_{i,j}$, $B_{i,j}$) in einer ersten Richtung und zweite Mittel (24-b) zur Berechnung eines zweiten Profils der Akkumulation der digitalen Werte in einer zweiten Richtung, die von der ersten Richtung verschieden ist, umfaßt, daß die ersten Rechenmittel Mittel (24-a) zur Berechnung der Summe der digitalen Werte der Bildelemente ($I_{i,j}$, $B_{i,j}$) jeder Bildelementspalte zur Erstellung des ersten Profils der Akkumulation der digitalen Werte aufweisen und daß die zweiten Rechenmittel Mittel (24-a) zur Berechnung der Summe der digitalen Werte der Bildelemente ($I_{i,j}$, $B_{i,j}$) jeder Zeile für die Erstellung des zweiten Profils der Akkumulation der digitalen Werte aufweisen.

10. Anlage nach Anspruch 9, **dadurch gekennzeichnet, daß** sie außerdem Mittel (24-b) zum Filtern dieser Profile, die den ersten und den zweiten Rechenmitteln zugeordnet sind, und mit diesen Filtermittel (24-b) verbundene Schwellenwertsetzmittel (24-c) für die Begrenzung dieser verdächtigen Zonen aufweist.

11. Anlage nach einem der Ansprüche 9 und 10, **dadurch gekennzeichnet, daß** sie am Ausgang des Filterkreises (21) angeordnete und mit dem Speicher (18) verbundene Mittel (20) zur Verwaltung der Adressierung der Bildelemente ($I_{i,j}$, $B_{i,j}$) in diesem Speicher (18) aufweist, die dafür ausgelegt sind, in diesem Speicherzonen zu begrenzen, die für die Aufzeichnung von aufeinanderfolgenden Zeilen von Bildelementen ausgelegt sind, die jeweils mindestens ein Bildelement umfassen, das mindestens einer Unregelmäßigkeit (34) entspricht, wobei diese Speicherzonen jeweils eine maximale Kapazität haben.

12. Anlage nach Anspruch 11, **dadurch gekennzeichnet, daß** die Verarbeitungseinheit (22) außerdem Mittel zur Berechnung der Anzahl von Zeilen von Bildelementen($I_{i,j}$, $B_{i,j}$) von verdächtigen Zonen, die in aufeinanderfolgenden Speicherzonen gespeichert sind und ein und derselben Unregelmäßigkeit (34) entsprechen, und Mittel zum Vergleichen dieser Anzahl von Zeilen mit einer Schwelle der Erfassung eines Fehlers großer Länge aufweist.

## Claims

1. A surface inspection method for a moving strip, for the purpose of surface flaw detection, including the steps comprising the following:

   - forming, with the aid of photographing means (12), at least one digital image of at least one of the faces of the strip (10), which image consists of a set of successive rows of image elements ($I_{i,j}$, $B_{i,j}$), each element being assigned a digital value,

   - filtering the said at least one digital image to detect surface irregularities (34) by detecting relative variations in the said digital values,

   - segmenting the said at least one digital image into suspect regions (66) so that each suspect region (66) contains one surface irregularity (34), and

   - processing the suspect regions (66) to identify the type of surface flaw corresponding to each irregularity (34) detected,

   **characterised in that** the step of segmenting the said at least one image comprises the calculation of a first profile indicating the accumulation of the digital values of the image elements ($I_{i,j}$, $B_{i,j}$) in a first direction, the thresholding of the said calculated profile so as to define image element bands each having at least one surface irregularity (34), the calculation, for each band defined, of a second profile indicating the accumulation of the digital values in a second direction distinct from the first direction, and the thresholding of the said second calculated profile in order to define the said suspect regions (66) each containing one surface irregularity, **in that** the said step of calculating the said first profile includes the calculation of the sum of the digital values of each column of image elements ($I_{i,j}$, $B_{i,j}$), and **in that** the said step of calculating the said second profile includes the calculation, for each band, of the sum of the digital values of each row of image elements ($I_{i,j}$, $B_{i,j}$).

2. A method according to claim 1, **characterised in that**, after the step of segmenting the images into suspect regions (66), for each region (66) a calculation is made of the individual surface of portions of the regions each consisting of image elements ($I_{i,j}$, $B_{i,j}$) that represent an irregularity segment, and the irregularity segments whose surface is less than a predefined threshold are eliminated.

3. A method according to one of claims 1 and 2, **characterised in that** the said image formation step includes the formation of a set of images of successive portions of the moving strip (10) in the form of rows and columns of image elements ($I_{i,j}$, $B_{i,j}$) and the merging of the said images into one image, the said rows being stored in a memory (18) at successive addresses.

4. A method according to any one of claims 1 to 3, **characterised in that**, after the step of filtering the stored image, in the said memory (18) a storage region is defined in response to the detection of an image element of an irregularity, in which storage region there are stored rows of image elements successively generated by the photographing means (12) and comprising at least one image element corresponding to at least one irregularity, the said segmentation step being carried out on each storage region.

5. A method according to claim 4, **characterised in that** the storage region opened in the memory (18) in response to the detection of an image element of at least one irregularity is closed as soon as no further image element of an irregularity is detected in a designated number of rows of image elements ($I_{i,j}$, $B_{i,j}$).

6. A method according to one of claims 4 and 5, **characterised in that** the said method additionally comprises a step for detecting long-length storage regions by comparing the number of rows of image elements ($I_{i,j}$, $B_{i,j}$) stored in each storage region with a designated long-length storage region detection threshold, the said storage region being closed in the event of the said threshold being exceeded.

7. A method according to claim 6, **characterised in that**, after the step of image segmentation into suspect regions (66), a group of suspect regions (66) is formed by matching suspect regions (66) of successive storage regions, at least one of which regions is a long-length storage region, and corresponding to a single irregularity (34), and when the total number of rows of image elements of the suspect regions (66) of the said group is higher than a long-length flaw detection threshold, the image processing step is carried out on one of the said suspect regions (66) in the said group and the result of the processing is assigned to the other suspect regions (66) in the said group.

8. A method according to any one of claims 1 to 7, **characterised in that** the said step of filtering the digital images comprises the detection of the contours of each irregularity (34).

9. Surface inspection apparatus for a moving strip (10), for carrying out an inspection method according to any one of claims 1 to 10 [sic — 8], **characterised in that** the said apparatus comprises means for photographing (12) at least one of the faces of the strip (10), a memory (18) for the storage of at least one image of the strip in the form of rows and columns of image elements ($I_{i,j}$, $B_{i,j}$) each associated with a digital value, a circuit for filtering (21) the said at least one digital image to detect surface irregularities (34) by detecting relative variations in the said digital values, and a unit for processing (22) the signals derived from the filtering circuit (21), including a first stage (24) for segmentation of the said at least one digital image into suspect regions (66) each having one surface irregularity (34), and a second stage (26) for the image processing of suspect regions (66) to identify the type of surface flaw corresponding to the said irregularity, and **in that** the first segmentation stage (24) comprises first means (24-a) for calculating a first profile indicating the accumulation of the digital values of the image elements ($I_{i,j}$, $B_{i,j}$) in a first direction, and second means (24-b) for calculating a second profile for the accumulation of the digital values in a second direction distinct from the first direction, **in that** the first calculating means comprise means for calculating (24-a) the sum of the digital values of the image elements ($I_{i,j}$, $B_{i,j}$) of each image element column for the purpose of shaping the first profile indicating the accumulation of the digital values, and **in that** the second calculating means comprise means for calculating (24-a) the sum of the digital values of the image elements ($I_{i,j}$, $B_{i,j}$) of each row for the purpose of shaping the second profile indicating the accumulation of the said digital values.

10. Apparatus according to claim 9, **characterised in that** it additionally comprises means for filtering (24-b) the said profiles, which means are linked to the said first and second calculating means, and thresholding means (24-c) connected to the said filtering means (24-b) for the purpose of defining the said suspect regions.

11. Apparatus according to one of claims 9 and 10, **characterised in that** it comprises means (20) for managing the addressing of the image elements ($I_{i,j}$, $B_{i,j}$) in the memory (18), which means are arranged at the output of the filtering circuit (21), are connected to the said memory (18) and are suitable for defining, in the said memory, storage regions for recording successive rows of image elements, each row comprising at least one image element corresponding to at least one irregularity (34), the said storage regions each having a maximum capacity.

12. Apparatus according to claim 11, **characterised in that** the processing unit (22) additionally comprises means for calculating the number of rows of image elements of suspect regions stored in successive storage regions and corresponding to a single irregularity (34), and means for comparing the said number of rows with a long-length flaw detection threshold.

FIG.1

FIG.2

j ème colonne

i ème ligne

Ii, j

M

FIG.3a

FIG.3b

FIG.3c

FIG.3d

FIG.3e

FIG.4

Début

78

80

82

83

84

86

88

FIG. 5

FIG.7

FIG.6a

FIG.6b